# EUROPEAN PATENT SPECIFICATION

(11) **EP 4 275 962 B1**
(45) Date of publication and mention of the grant of the patent: **04.12.2024**
(21) Application number: 23195584.0
(22) Date of filing: 27.12.2019
(51) Int. Cl.: B60R 11/04, B60R 11/00, B60R 11/02

(54) **DRIVER ASSIST SYSTEM**
FAHRERASSISTENZSYSTEM
SYSTÈME D'AIDE À LA CONDUITE

(30) Priority: 28.12.2018 US 201862785740 P; 26.09.2019 US 201962906387 P
(43) Date of publication of application: 15.11.2023
(62) Divisional of application: 19904924.8
(73) Proprietor: ZF Active Safety and Electronics US LLC, Livonia MI 48150 (US)
(72) Inventor: Hart, Michael A., Dexter, Michigan, 48130 (US); Harsh, Shah, Southfield, Michigan, 48076 (US)
(74) Representative: Ege Lee & Roider Patentanwälte

(56) References cited:
- EP-A1- 3 268 249
- EP-A1- 3 330 131
- EP-A1- 3 372 452

## Description

### Field of the present invention

The present invention is directed to a mounting arrangement for a driver assist system and, more particularly, to a mounting arrangement for a driver assist system that is mounted to a vehicle window.

### Background

Vehicle driver assist systems that use a camera to monitor the environment surrounding the vehicle are known. For example, one particular type of driver assist system monitors the area in front of the vehicle and uses a forward looking camera. It is common to mount a forward looking driver assist system to the front windshield of the vehicle. Such a forward looking driver assist system can aid a driver in the operation of a motor vehicle by providing operational information such as a potential collision, lane or roadway departure, location of pedestrians, road sign information, etc. Driver assist systems could also be mounted to other vehicle locations such as the rear window.

Data from the driver assist system is provided to other vehicle systems to provide the driver with a warning, haptic or tactile feedback, and/or autonomous control of the vehicle. EP 3 330 131 A1 is considered the closest prior art and discloses a vehicle driver assist system comprising a housing having a camera mounted therein, the housing having at least one tab and a mounting bracket connectable with the vehicle, the mounting bracket including a channel for receiving the tab on the housing, the channel being at least partially defined by an arm extending from a sidewall of the bracket, the arm having an end surface and the sidewall having a guide surface, the end surface of the arm and the guide surface at least partially defining an insertion opening that faces generally downwardly the tab on the housing sliding into the channel in the mounting bracket through the insertion opening to connect the housing to the mounting bracket, the housing and the tab being pivotal relative to the bracket after the tab has slid into the channel.

### Summary of the present invention

The invention is defined by a vehicle driver assist system according to claim 1.

According to the present invention, a vehicle driver assist system includes a housing having a camera mounted therein. The housing has at least one tab. A mounting bracket connectable with the vehicle includes a channel for receiving the tab on the housing. The channel is at least partially defined by an arm extending from a sidewall of the bracket. The arm has an end surface and the sidewall has a guide surface. The end surface of the arm and the guide surface at least partially define an insertion opening that faces generally downwardly. The tab on the housing slides into the channel in the mounting bracket through the insertion opening to connect the housing to the mounting bracket. The housing and the tab are pivotal relative to the bracket after the tab has slid into the channel. A V-shaped notch in the guide surface is defined by first and second side surfaces of the notch extending at an angle to each other, the first and second side surfaces of the notch extending transverse to the guide surface, wherein the tab engages the second notch side surface and a stop surface on the arm when the housing is connected to the bracket.

### Brief Description of the Drawings

The foregoing and other features and advantages of the present invention will become apparent to those skilled in the art to which the present invention relates upon reading the following description with reference to the accompanying drawings, in which:
Fig. 1 shows a schematic side view of a first embodiment of a driver assist system constructed in accordance with the present invention;
Fig. 2 shows an exploded view of the driver assist system of Fig. 1;
Fig. 3 shows a housing being inserted into a bracket of the driver assist system of Fig. 1;
Fig. 4 shows an enlarged view of a portion of the driver assist system of Fig. 1;
Fig. 5 shows an enlarged view of a rear portion of the driver assist system of Fig. 1;
Fig. 6 shows a top view of the driver assist system of Fig. 1;
Fig. 7 shows an enlarged view of a sidewall of the bracket of the driver assist system of Fig. 1;
Fig. 8 shows a schematic side view of a second embodiment of a driver assist system constructed in accordance with the present invention;
Fig. 9 shows a pictorial view of a bracket of the driver assist system of Fig. 8;
Fig. 10shows an enlarged view of a rear portion of the driver assist system of Fig. 8; and
Fig. 11 shows a schematic cross-sectional view of the driver assist system of Fig. 8.

### Description

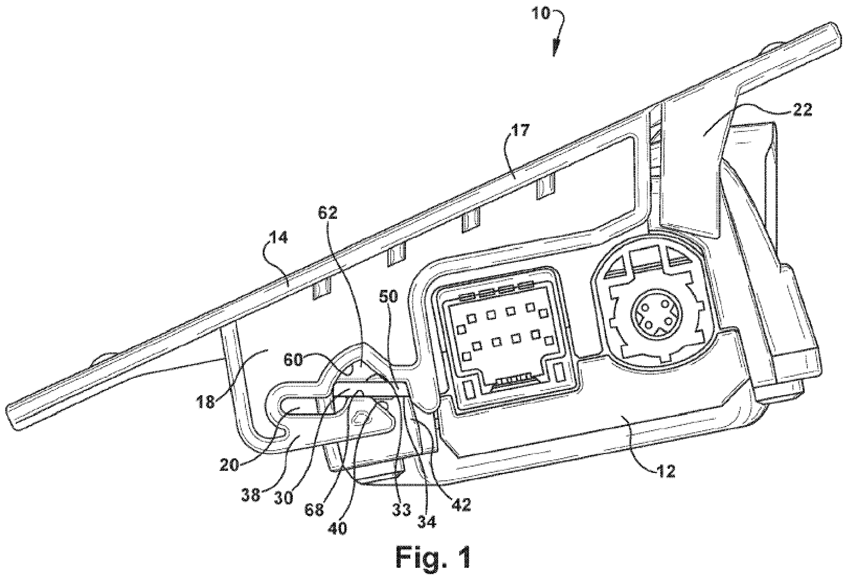

A vehicle driver assist system 10 constructed in accordance with the present invention is shown in Figs. 1-3. The driver assist system 10 includes a housing 12 secured in a mounting bracket 14. A camera 16 or other sensor is mounted within the housing 12. The camera 16 is operatively connected to data processing circuitry (not shown) within the camera housing 12 for processing any image within the field of view of the camera. The circuitry within the housing 12 is connectable with other vehicle systems. For the purposes of explanation, the driver assist system 10 is a forward looking system and may be mounted to a window of a vehicle, such as a front windshield. The driver assist system 10 views the environment outside of the vehicle and analyzes monitored information for vehicle functions, such as lane keeping, roadway departures, pedestrian information, road sign information, etc. The analyzed information is then further processed and used by vehicle control systems and/or warning systems. Those skilled in the art will appreciate that the present invention is applicable to other driver assist systems such as a rearward facing system for monitoring the environment rearward of the vehicle.

The mounting bracket 14 is connectable to the window in any desired manner. The mounting bracket 14 may have a mounting portion 17 that is connectable to the window and that least one sidewall 18 that extends from the mounting portion 17 away from the window when the mounting bracket is connected to the window. The mounting bracket 14 is shown as having two sidewalls 18 that extend on opposite sides of the housing 12 when the housing is connected to the bracket.

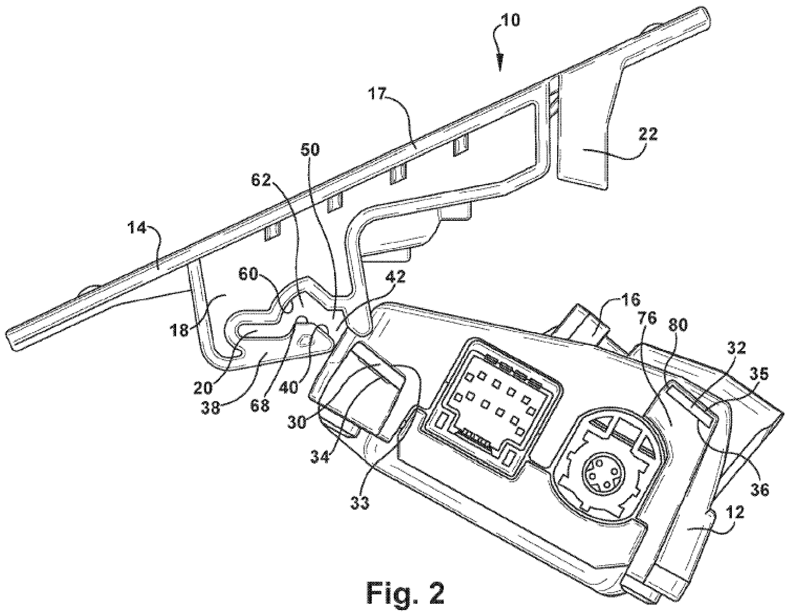

Each of the sidewalls 18 (Fig. 2) has a forward channel or slot 20. The mounting bracket 14 is shown as having two forward channels 20, however, it is contemplated that the bracket 14 may include any desired number of forward channels. The mounting bracket 14 has at least one rear locking arm 22. The mounting bracket 14 is shown as having two rear locking arms 22, however, it is contemplated that the bracket may include any number of rear locking arms.

The forward channels 20 on the mounting bracket 14 receive forward or first rectangular tabs 30 on the housing 12. The housing 12 may have two forward tabs 30 extending from opposite sides of the housing. The rear locking arms 22 engage rearward or second rectangular tabs 32 on the housing 12. The housing may have two rearward tabs 32 that extend from opposite sides of the housing 12. The forward tabs 30 may have upper surfaces 33 and lower surfaces 34 that extend generally parallel to the upper surfaces 33. The rearward tabs 32 may have upper surfaces 35 and lower surfaces 36 that extend generally parallel to each other. The upper surfaces 33 and lower surfaces 34 of the forward tabs 30 may extend generally parallel to the upper surfaces 35 and lower surfaces 36 of the rearward tabs 32.

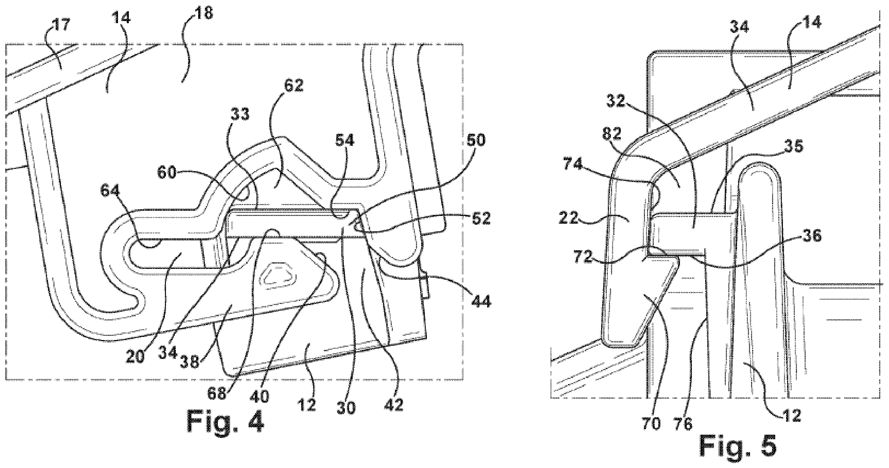

The forward channels 20 (Fig. 4) are at least partially defined by arms 38 extending from the sidewalls 18 of the bracket 14. Only one arm 38 of the bracket 14 will be described in detail. The arm 38 has an end surface 40 that partially defines an insertion opening 42 that faces generally downwardly. The end surface 40 of the arm 38 extends generally parallel to a guide surface 44 on the sidewall 18 of the bracket 14 to define the insertion opening 42. A V-shaped notch 50 in the guide surface 44 is defined by first and second side surfaces 52, 54 of the notch 50 extending at an angle to each other. The first and second side surfaces 52, 54 of the notch 50 extend generally transverse to the guide surface 44.

A curved surface 60 extends from the guide surface 44 on the sidewall 18. The curved surface 60 is spaced from the notch 50 and faces toward the insertion opening 42. The curved surface 60 and the portion of the guide surface 44 extending between the curved surface and the notch 50 define a wedged shaped portion 62 of the forward channel 20. A surface 64 on the sidewall 18 extends from the curved surface 60 and generally parallel to the arm 38. The surface 64 extends from the curved surface 60 to an end of the channel 20. The space between the surface 64 and the arm 38 provides strain relief to help prevent the mounting bracket 14 from breaking.

After the mounting bracket 14 (Figs. 2-3) is secured to the window or windshield, the housing 12 is snapped into the bracket by first inserting the forward tabs 30 into the associated forward channels 20 and then pivoting the rear end of the housing into engagement with the rear locking arms 22. The rear locking arms 22 lock onto the associated rearward tabs 32 of the housing 12 thereby securing the housing into the bracket.

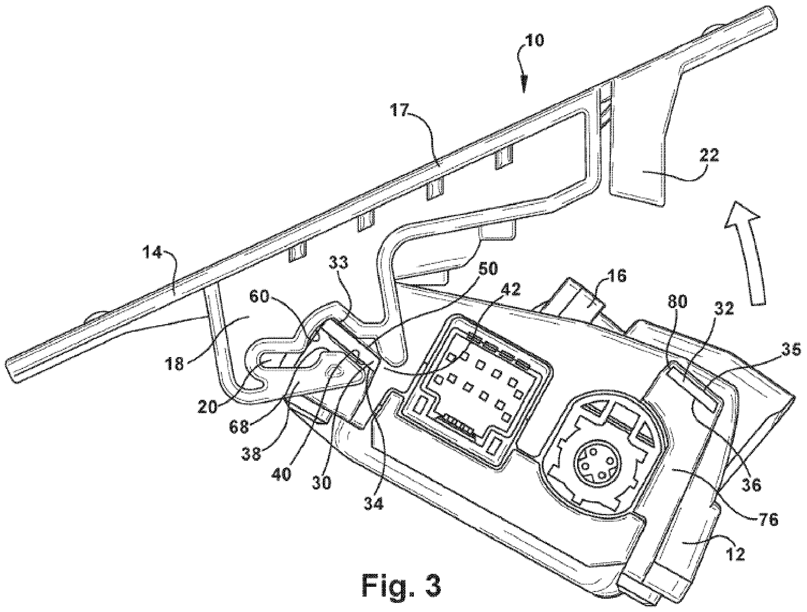

The forward tabs 30 are inserted into the insertion openings 42 with the rearward tabs 32 spaced from the rear locking arms 22, as shown in Fig. 3. The forward tabs 30 may engage the end surfaces 40 on the arms 38 extending from the sidewalls 18 and the guide surfaces 44 on the sidewalls to guide insertion of the forward tabs into the forward channels 20. The forward tabs 30 may be inserted into the forward channels 20 until the forward tabs engage the curved surfaces 60.

After insertion of the forward tabs 30 into the forward channels 20, the housing 12 may be pivoted relative to the bracket 14 from the position shown in Figs. 3 toward the position shown in Fig. 1. The rearward tabs 32 move toward the rear locking arms 22 as the housing 12 is pivoted relative to the bracket 14. The housing 14 is pivoted until the upper surfaces 33 of the forward tabs 30 engage the second notch side surfaces 54 and the lower surfaces 34 of the forward tabs engage stop surfaces 68 on the arms. The rearward tabs 32 may engage the rear locking arms 22. The housing 12 may be pivoted about the intersection of the second notch side surface 54 and the guide surface 44 and/or the intersection of the end surface 40 of the arm 38 and the stop surface 68 on the arm. The forward tabs 30 may be spaced from the curved surfaces 60 when the housing 12 is pivoting relative to the bracket 14 and once the tabs 30 engage the stop surface 68 and/or the second side surface 54 of the notch 50.

The housing 12 is pivoted relative to the mounting bracket 14 until the forward tabs 30 engage the second side surfaces 54 of the notches 50 and the stop surfaces 68. It is also contemplated that the forward tabs 30 may engage the first side surfaces 52 of the notches. The forward tabs 30 may have an interference fit between the second side surfaces 54 of the notches 50 and the stop surfaces 68 on the arms 36 when the housing 12 is connected to the bracket 14.

The rearward tabs 32 (Fig. 5) on the housing 12 snap into the rear locking arms 22 when the housing pivots relative to the bracket 14. Only one locking arm 22 of the bracket 14 will be described in detail. The locking arm 22 has detent 70 that engages the rearward tab 32. The detent 70 has an upper surfaces 72 that engages the lower surface 36 on the rearward tab 32. The upper surface 72 on the detent 70 may extend generally perpendicular to a vertical surface 74 on the locking arm 22. The lower surface 36 on the rearward tab 32 of the housing 12 may extend generally perpendicular to a vertical surface 76 of the housing. Thus, the lower surface 36 on the rearward tab 32 of the housing 12 may extend generally parallel to the upper surface 72 on the locking arm detent 70 when the housing is connected to the bracket 14.

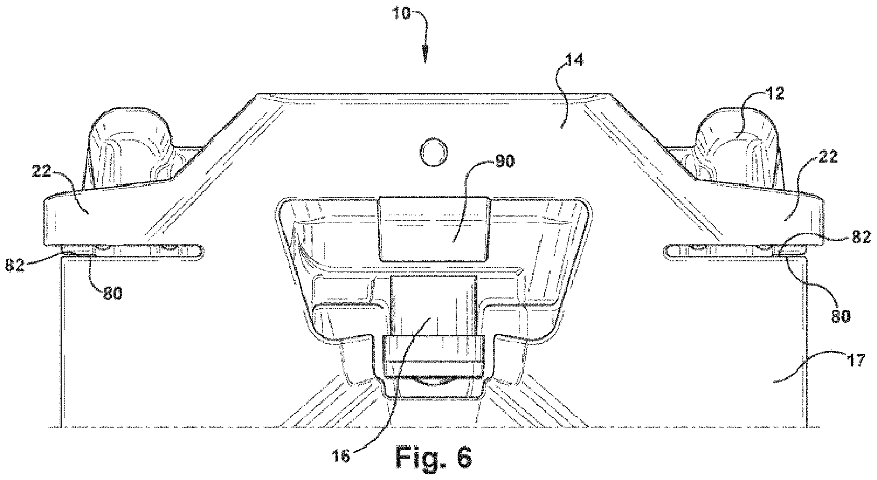

The rearward tabs 32 on the housing 12 may have forward facing surfaces 80 that engage rearward facing surfaces 82 on the bracket 14 to prevent the camera or sensor 16 extending from the housing from engaging the window. A biasing member or spring tab 90 (Fig. 6) on the bracket 14 may apply a downward force on the housing 12 to help maintain the rearward tabs 32 in engagement with the upper surfaces 72 on the detents 70. The biasing member 90 urges the lower surfaces 36 on the tabs 32 of the housing 12 into engagement with the upper surfaces 72 on the detents 70 of the locking arms 22.

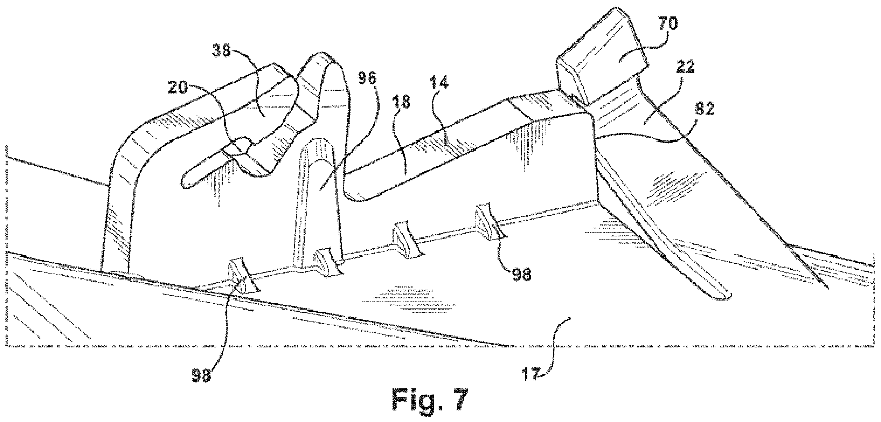

The sidewalls 18 (Fig. 7) of the bracket 14 may include projections 96 extending toward the housing 12 when the housing is connected to the bracket. The projections 96 may engage the housing 12 when the housing is connected to the bracket 14. The bracket 14 may also have stiffening ribs 98 extending between the sidewalls 18 of the bracket and the mounting portion 17 of the bracket 14.

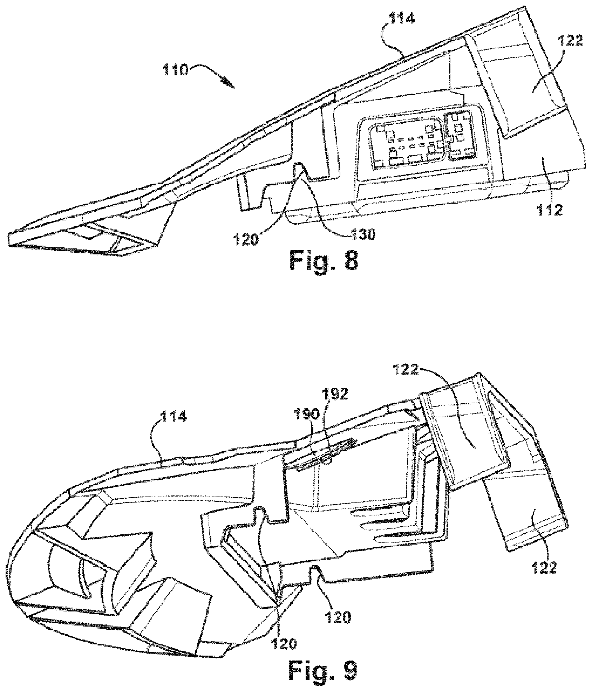

Another vehicle driver assist system 110 is shown in the Figs. 8-11. This driver assist system 110 includes a housing 112 secured in a mounting bracket 114. A plurality of cameras or other sensors may be mounted within the housing 112. The housing 112 may have three cameras, however, it is contemplated that any desired number of cameras may be mounted within the housing. The cameras are operatively connected to data processing circuitry (not shown) within the camera housing 112 for processing images within the fields of view of the cameras. The circuitry within the housing 112 is connectable with other vehicle systems. The driver assist system 110 may be a forward looking system and may be mounted to a window of a vehicle, such as a front windshield. The driver assist system 110 views the environment outside of the vehicle and analyzes monitored information for vehicle functions, such as lane keeping, roadway departures, pedestrian information, road sign information, etc. The analyzed information is then further processed and used by vehicle control systems and/or warning systems. Those skilled in the art will appreciate that the present driver assist system is applicable to other driver assist systems such as a rearward facing system for monitoring the environment rearward of the vehicle.

The mounting bracket 114 is connectable to the window in any desired manner. The mounting bracket 114 includes at least one forward channel or slot 120 (Figs. 8-9). It is contemplated that the bracket 114 may include any desired number of forward channels 120. The mounting bracket 114 has at least one rear locking arm 122. It is contemplated that the bracket 114 may include any number of rear locking arms 122.

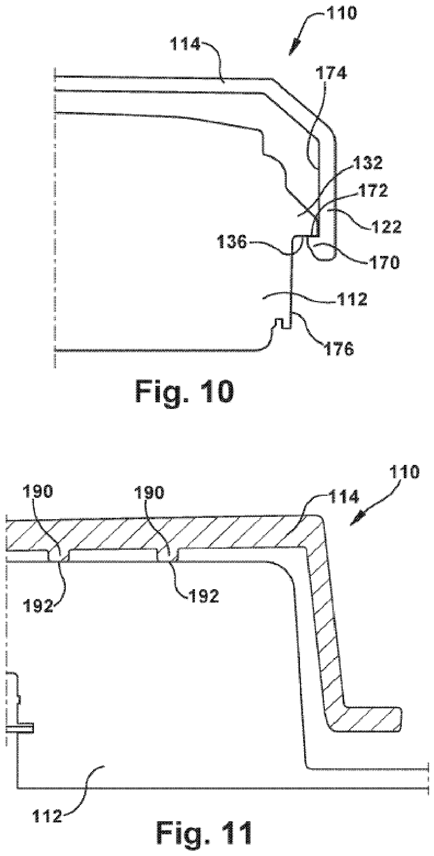

The forward channels 120 on the mounting bracket 114 receive forward or first tabs 130 on the housing 112. The rear locking arms 122 engage rearward tabs 132 on the housing 112 (Fig. 10).

After the mounting bracket 114 is secured to the window or windshield (Fig. 8), the housing 112 is snapped into the bracket 114 by first inserting the forward tabs 130 into the associated front channels 120 and then pivoting the rear end of the housing into engagement with the rear locking arms 122. The rear locking arms 122 lock onto associated rearward tabs 132 of the housing 112 thereby securing the housing into the bracket 114.

The rearward tabs 132 on the housing 112 snap into the rear locking arms 122 when the housing pivots relative to the bracket 114. The rear locking arms 122 (Fig. 10) have detents 170. The detents 170 on the locking arms 122 have upper surfaces 172 that engage lower surfaces 136 on the rearward tabs 132. The upper surfaces 172 on the locking arm detents 170 may extend generally perpendicular to vertical surfaces 174 on the locking arms 122. The lower surfaces 136 on the rearward tabs 122 of the housing 112 may extend generally perpendicular to side walls 176 of the housing. Thus, the lower surfaces 136 on the rearward tabs 132 of the housing 112 may extend generally parallel to the upper surfaces 172 on the locking arm detents 170.

The mounting bracket 114 may include at least one biasing member or rib 190 (Figs. 9 and 11) that engages the housing 112 when the housing is connected to the mounting bracket 114. It is contemplated that the mounting bracket 114 may have any desired number of ribs 190. The ribs 190 allow the housing 112 to pivot relative to the bracket 114 beyond a nominal location so that the rearward tabs 132 on the housing snap into the rear locking arms 122 of the bracket. The ribs 190 may have a curved surface 192 that engages the housing 112 and permits pivoting of the housing beyond the nominal location. The ribs 190 may also apply a force to the housing 112 to ensure that the upper surfaces 172 on the locking arm detents 170 engage the lower surfaces on the rearward tabs 132 of the housing.

## Claims

1. A vehicle driver assist system (10; 110) comprising:
a housing (12; 112) having a camera (16) mounted therein, the housing (12; 112) having at least one tab (30; 130); and
a mounting bracket (14; 114) connectable with the vehicle, the mounting bracket (14; 114) including a channel (20; 120) for receiving the tab (30; 130) on the housing (12; 112), the channel (20; 120) being at least partially defined by an arm (38) extending from a sidewall (18) of the bracket (14; 114), the arm (38) having an end surface (40) and the sidewall (18) having a guide surface (44), the end surface (40) of the arm (38) and the guide surface (44) at least partially defining an insertion opening (42) that faces generally downwardly, the tab (30; 130) on the housing (12; 112) sliding into the channel (20; 120) in the mounting bracket (14; 114) through the insertion opening (42) to connect the housing (12; 112) to the mounting bracket (14; 114), the housing (12; 112) and the tab (30; 130) being pivotal relative to the bracket (14; 114) after the tab (30; 130) has slid into the channel (20; 120), wherein a V-shaped notch (50) in the guide surface (44) is defined by first and second side surfaces (52, 54) of the notch (50) extending at an angle to each other, the first and second side surfaces (52, 54) of the notch (50) extending transverse to the guide surface (44), wherein the tab (30; 130) engages the second notch side surface (54) and a stop surface (68) on the arm (38) when the housing (12; 112) is connected to the bracket (14; 114).

2. A vehicle driver assist system (10; 110) as set forth in claim 1, wherein a curved surface (60) extends from the guide surface (44) on the sidewall (18), the curved surface (60) being spaced from the notch (50) and facing toward the insertion opening (42), the curved surface (60) and the portion of the guide surface (44) extending between the curved surface (60) and the notch (50) defining a wedged shaped portion (62) of the channel (20; 120).

3. A vehicle driver assist system (10; 110) as set forth in claim 1, wherein the housing (12; 112) pivots about the intersection of the second notch side surface (54) and the guide surface (44) on the base portion and/or the intersection of the end surface (40) of the arm (38) and the stop surface (68) on the arm (38).

4. A vehicle driver assist system (10; 110) as set forth in claim 1, wherein a rearward tab (32; 132) on the housing (12; 112) engages a rear locking arm (22; 122) on the bracket (14; 114).

5. A vehicle driver assist system (10; 110) as set forth in claim 1, wherein the mounting bracket (14; 114) includes at least one locking arm (22; 122) having an upper surface (72; 172) that engages a lower surface (36; 136) on a second tab (32; 132) on the housing (12; 112), the upper surface (72; 172) on the locking arm (22; 122) extending generally perpendicular to a vertical surface (74; 174) on the locking arm (22; 122), the lower surface (36; 136) on the second tab (32; 132) extending generally perpendicular to a vertical surface (76; 176) on a side wall of the housing (12; 112), the mounting bracket (14; 114) having a biasing member (90; 190) that applies a force to the housing (12; 112) to urge the lower surface (36; 136) on the second tab (32; 132) of the housing (12; 112) into engagement with the upper surface (72; 172) on the locking arm (22; 122).

6. A vehicle driver assist system (10; 110) as set forth in claim 5, wherein the biasing member (90; 190) is a rib (190) that engages the housing (12; 112), the rib (190) having a curved surface (92) that engages the housing (12; 112).

7. A vehicle driver assist system (10; 110) as set forth in claim 5, wherein the biasing member (90; 190) is a spring tab (90) that engages the housing (12; 112).

## Patentansprüche

1. Fahrzeugfahrerassistenzsystem (10; 110), umfassend:
ein Gehäuse (12; 112)mit einer darin angebrachten Kamera (16), wobei das Gehäuse (12; 112) mindestens eine Zunge (30; 130) aufweist; und
eine Montagehalterung (14; 114), die mit dem Fahrzeug verbindbar ist, wobei die Montagehalterung (14; 114) einen Kanal (20; 120) zur Aufnahme der Zunge (30; 130) am Gehäuse (12; 112) aufweist, wobei der Kanal (20; 120) zumindest teilweise durch einen Arm (38) definiert ist, der sich von einer Seitenwand (18) der Halterung (14; 114) erstreckt, wobei der Arm (38) eine Endfläche (40) und die Seitenwand (18) eine Führungsfläche (44) aufweist, wobei die Endfläche (40) des Arms (38) und die Führungsfläche (44) zumindest teilweise eine Einführöffnung (42) definieren, die im Allgemeinen nach unten gerichtet ist, wobei die Zunge (30; 130) an dem Gehäuse (12; 112) durch die Einführöffnung (42) in den Kanal (20; 120) in der Montagehalterung (14; 114) gleitet, um das Gehäuse (12; 112) mit der Montagehalterung (14; 114) zu verbinden, wobei das Gehäuse (12; 112) und die Zunge (30; 130) relativ zu der Halterung (14; 114) schwenkbar sind, nachdem die Zunge (30; 130) in den Kanal (20; 120) geschoben wurde, wobei eine V-förmige Kerbe (50) in der Führungsfläche (44) durch eine erste und eine zweite Seitenfläche (52, 54) der Kerbe (50) definiert ist, die sich in einem Winkel zueinander erstrecken, wobei sich die erste und die zweite Seitenfläche (52, 54) der Kerbe (50) quer zu der Führungsfläche (44) erstrecken, wobei die Zunge (30; 130) mit der zweiten Kerbenseitenfläche (54) und einer Anschlagfläche (68) an dem Arm (38) in Eingriff steht, wenn das Gehäuse (12; 112) mit der Halterung (14; 114) verbunden ist.

2. Fahrzeugfahrerassistenzsystem (10; 110) nach Anspruch 1, wobei sich eine gekrümmte Fläche (60) von der Führungsfläche (44) an der Seitenwand (18) erstreckt, wobei die gekrümmte Fläche (60) von der Kerbe (50) beabstandet ist und der Einführöffnung (42) zugewandt ist, wobei die gekrümmte Fläche (60) und der Teil der Führungsfläche (44), der sich zwischen der gekrümmten Fläche (60) und der Kerbe (50) erstreckt, einen keilförmigen Teil (62) des Kanals (20; 120) definieren.

3. Fahrzeugfahrerassistenzsystem (10; 110) nach Anspruch 1, wobei das Gehäuse (12; 112) um den Schnittpunkt der zweiten Kerbenseitenfläche (54) und der Führungsfläche (44) am Basisteil und/oder den Schnittpunkt der Endfläche (40) des Arms (38) und der Anschlagfläche (68) am Arm (38) schwenkt.

4. Fahrzeugfahrerassistenzsystem (10; 110) nach Anspruch 1, wobei eine hintere Zunge (32; 132) am Gehäuse (12; 112) in einen hinteren Verriegelungsarm (22; 122) an der Halterung (14; 114) eingreift.

5. Fahrzeugfahrerassistenzsystem (10; 110) nach Anspruch 1, wobei die Montagehalterung (14; 114) mindestens einen Verriegelungsarm (22; 122) mit einer oberen Fläche (72; 172) aufweist, die mit einer unteren Fläche (36; 136) an einer zweiten Zunge (32; 132) am Gehäuse (12; 112) in Eingriff steht, wobei sich die obere Fläche (72; 172) am Verriegelungsarm (22; 122) im Allgemeinen senkrecht zu einer vertikalen Fläche (74; 174) am Verriegelungsarm (22; 122) erstreckt, wobei sich die untere Fläche (36; 136) an der zweiten Zunge (32; 132) im Allgemeinen senkrecht zu einer vertikalen Fläche (76; 176) an einer Seitenwand des Gehäuses (12; 112) erstreckt, wobei die Montagehalterung (14; 114) ein Vorspannelement (90; 190) aufweist, das eine Kraft auf das Gehäuse (12; 112) ausübt, um die untere Fläche (36; 136) an der zweiten Zunge (32; 132) des Gehäuses (12; 112) in Eingriff mit der oberen Fläche (72; 172) an dem Verriegelungsarm (22; 122) zu drücken.

6. Fahrzeugfahrerassistenzsystem (10; 110) nach Anspruch 5, wobei das Vorspannelement (90; 190) eine Rippe (190) ist, die an dem Gehäuse (12; 112) angreift, wobei die Rippe (190) eine gekrümmte Oberfläche (92) aufweist, die an dem Gehäuse (12; 112) angreift.

7. Fahrzeugfahrerassistenzsystem (10; 110) nach Anspruch 5, wobei das Vorspannelement (90; 190) eine Federzunge (90) ist, die mit dem Gehäuse (12; 112) in Eingriff steht.

## Revendications

1. Système d'assistance au conducteur d'un véhicule (10; 110) comprenant :
un boîtier (12; 112) dans lequel est montée une caméra (16), le boîtier (12; 112) comportant au moins une languette (30; 130) ; et
un support de montage (14; 114) pouvant être relié au véhicule, le support de montage (14; 114) comprenant un canal (20; 120) pour recevoir la languette (30; 130) sur le boîtier (12; 112), le canal (20; 120) étant au moins partiellement défini par un bras (38) s'étendant à partir d'une paroi latérale (18) du support (14; 114), le bras (38) ayant une surface d'extrémité (40) et la paroi latérale (18) ayant une surface de guidage (44), la surface d'extrémité (40) du bras (38) et la surface de guidage (44) définissant au moins partiellement une ouverture d'insertion (42) orientée généralement vers le bas, la languette (30; 130) sur le boîtier (12; 112) glissant dans le canal (20; 120) du support de montage (14; 114) à travers l'ouverture d'insertion (42) pour relier le boîtier (12; 112) au support de montage (14; 114), le boîtier (12; 112) et la languette (30 ; 130) étant pivotants par rapport au support (14; 114) une fois que la languette (30; 130) a glissé dans le canal (20; 120), dans lequel une encoche en forme de V (50) dans la surface de guidage (44) est définie par les première et deuxième surfaces latérales (52, 54) de l'encoche (50) s'étendant à un angle l'une par rapport à l'autre, les première et deuxième surfaces latérales (52, 54) de l'encoche (50) s'étendant transversalement à la surface de guidage (44), dans lequel la languette (30; 130) s'engage dans la deuxième surface latérale de l'encoche (54) et dans une surface de butée (68) sur le bras (38) lorsque le boîtier (12; 112) est connecté au support (14; 114).

2. Système d'assistance au conducteur d'un véhicule (10; 110) selon la revendication 1, dans lequel une surface incurvée (60) s'étend à partir de la surface de guidage (44) sur la paroi latérale (18), la surface incurvée (60) étant espacée de l'encoche (50) et orientée vers l'ouverture d'insertion (42), la surface incurvée (60) et la partie de la surface de guidage (44) s'étendant entre la surface incurvée (60) et l'encoche (50) définissant une partie en forme de coin (62) du canal (20; 120).

3. Système d'assistance au conducteur d'un véhicule (10; 110) selon la revendication 1, dans lequel le boîtier (12; 112) pivote autour de l'intersection de la deuxième surface latérale d'encoche (54) et de la surface de guidage (44) sur la partie de base et/ou de l'intersection de la surface d'extrémité (40) du bras (38) et de la surface de butée (68) sur le bras (38).

4. Système d'assistance au conducteur d'un véhicule (10; 110) selon la revendication 1, dans lequel une languette arrière (32; 132) sur le boîtier (12; 112) s'engage dans un bras de verrouillage arrière (22; 122) sur le support (14; 114).

5. Système d'assistance au conducteur d'un véhicule (10; 110) selon la revendication 1, dans lequel le support de montage (14; 114) comprend au moins un bras de verrouillage (22; 122) ayant une surface supérieure (72; 172) qui s'engage dans une surface inférieure (36; 136) sur une deuxième languette (32; 132) sur le boîtier (12; 112), la surface supérieure (72; 172) sur le bras de verrouillage (22; 122) s'étendant généralement perpendiculairement à une surface verticale (74; 174) sur le bras de verrouillage (22; 122), la surface inférieure (36; 136) de la deuxième languette (32; 132) s'étendant généralement perpendiculairement à une surface verticale (76; 176) sur une paroi latérale du boîtier (12; 112), le support de montage (14; 114) ayant un élément de sollicitation (90; 190) qui applique une force au boîtier (12; 112) pour pousser la surface inférieure (36; 136) de la deuxième languette (32; 132) du boîtier (12; 112) en prise avec la surface supérieure (72; 172) sur le bras de verrouillage (22; 122).

6. Système d'assistance au conducteur d'un véhicule (10; 110) selon la revendication 5, dans lequel l'élément de sollicitation (90; 190) est une nervure (190) qui s'engage dans le boîtier (12; 112), la nervure (190) ayant une surface incurvée (92) qui s'engage dans le boîtier (12; 112).

7. Système d'assistance au conducteur d'un véhicule (10; 110) selon la revendication 5, dans lequel l'élément de sollicitation (90; 190) est une languette à ressort (90) qui s'engage dans le boîtier (12; 112).
